# EUROPEAN PATENT SPECIFICATION

(11) **EP 2 692 711 B1**
(45) Date of publication and mention of the grant of the patent: **14.08.2019**
(21) Application number: 13178177.5
(22) Date of filing: 26.07.2013
(51) Int. Cl.: C04B 35/584, C04B 35/597

(54) **SiAlON ceramics**
SiAlON-Keramik
Céramiques de SiAlON

(30) Priority: 02.08.2012 EP 12179041; 20.09.2012 EP 12185237
(43) Date of publication of application: 05.02.2014
(73) Proprietor: MDA Ileri Teknoloji Seramikleri Sanayi Ticaret Ltd. STi., Eskisehir (TR)
(72) Inventor: Mandal, Prof. Dr. Hasan, 26 000 Eskisehir (TR); Kara, Prof. Dr. Ferhat, 26 000 Eskisehir (TR); Turan, Prof. Dr. Servet, 26 000 Eskisehir (TR); Kara, Prof. Dr. Alpagut, 26 000 Eskisehir (TR)
(74) Representative: Sevinç, Cenk

(56) References cited:
- EP-A1- 0 741 115
- EP-A2- 1 939 155
- WO-A1-2006/097411
- WO-A1-2011/058176
- WO-A1-2012/085050
- WO-A2-00/02829
- WO-A2-02/070419
- GB-A- 2 157 282

## Description

The invention concerns α-β-SiAlON ceramics with improved properties according to present claim 1.

α-β-SiAlON and Si₃N₄ ceramics are used as cutting tool materials due to their high toughness and high hardness. The α-β-SiAlON ceramics have some advantages over Si₃N₄ ceramics due to the combination of high hardness (about 20 GPa) resulting from the existence of the α-SiAlON phase (α': MeₓSi₁₂₋₍ₘ₊ₙ₎Alₘ₊ₙOₙN₁₆₋ₙ), a relatively high toughness (about 7-8 MPam^{1/2}) and high strength (≥ 800 MPa) resulting from the β-SiAlON (β': Si_{6-z}Al_{z}O_{z}N_{8-z}) phase.

The properties of SiAlON ceramics are strongly controlled by the final phase composition, microstructure and the amount and type of the intergranular phases (amorphous or crystalline) which are closely related to the starting composition and especially to the type of sintering additives used.

Recent research has been concentrated on the effect of sintering additives on grain growth and intergranular phases. Common understanding is that an increase in aspect ratio of the grains and hence enhanced fracture toughness can be achieved by preferred segregation of large cations (e.g., La³⁺, Ce³⁺, Sm³⁺) on the prism planes of the grains. Furthermore, oxygen-rich intergranular phases are obtained by using smaller cations such as Lu³⁺ or Yb³⁺, while nitrogen containing intergranular phases formed with larger cations (e.g., La³⁺, Ce³⁺).

From document DE 10 2010 043 927 A1 it is known that CaO can be used in order to avoid α- to β-SiAlON transformation, Y₂O₃ and/or Re₂O₃ (where Z_{Re} ≥ 62) to increase the stability and hardness of α-SiAlON and Re₂O₃ (where Z_{Re} < 62) to develop elongated β-SiAlON grains and hence increase the fracture toughness (EP 1 414 580 B1).

In the SiAlON literature, however, there is no in depth study on intergranular phase crystallisation by using multi cation systems and their effect on the microstructure and machining performance of the SiAlON ceramics. However, such a knowledge is important in order to be able to design special materials for high performance tools, especially cutting tools.

It is an object of the invention to improve the properties of SiAlON ceramics, especially with respect to their performance at high temperatures when used as e.g. cutting tool.

According to the invention, this problem is solved by providing a ceramic material according to claim 1, whereas advantageous embodiments are defined within the depending claims. The ceramic material according to the invention comprises α- and β-SiAlON phases as well as an intergranular phase. The intergranular phase comprises crystalline nitrogen-rich oxynitride, advantageously aluminium containing melilite.

The inventors found in α-β-SiAlON ceramics doped with multi cations of Ca, Y, and/or Re (Z_{Re} ≥ 62) and Re (Z_{Re} < 62):
1) An increase in aspect ratio of the grains and hence enhanced fracture toughness can be achieved by preferred segregation of large Re₂O₃ cations (Z_{Re} < 62) on the prism planes of the grains;
2) Oxygen-rich intergranular phases (such as YAM - (Y, Re)4SiAlO₈N) were obtained by using smaller cations such as Lu³⁺ or Yb³⁺, while nitrogen containing intergranular phases (such as melilite - (Y, Re, Ca_{1.5})₂Si₃₋ₓAlₓO₃₊ₓN₄₋ₓ) formed with larger cations (La³⁺, Ce³⁺, Nd³⁺, Sm³⁺), wherein 0 ≤ x ≤ 1.

The inventors further found in α-β-SiAlON ceramics doped with multi cations of Ca, Sm and Yb:
3) The type of crystalline phase in Ca-Sm-Yb system is oxygen-rich intergranular phase (YAM - Yb₄SiAlO₈N) and the extent of crystallisation in triple pockets is almost full.

The inventors further found in α-β-SiAlON ceramics doped with multi cations of Ca, Sm and Y:
4) The type of crystalline phase in Ca-Sm-Y system is nitrogen-rich intergranular phase (melilite - (Ca_{1.5},Sm,Y)₂Si₃₋ₓAlₓO₃₊ₓN₄₋ₓ) and the extent of crystallisation in triple pockets is not full.

The inventors further found in α-β-SiAlON ceramics doped with multi cations of Ca, Sm and Dy:
5) The type of crystalline phase in Ca-Sm-Dy system is nitrogen-rich intergranular phase (melilite - (Ca_{1.5},Sm,Dy)₂Si₃₋ₓAlₓO₃₊ₓN₄₋ₓ) and the extent of crystallisation in triple pockets is improved but not full.

The inventors further found in α-β-SiAlON ceramics doped with multi cations of Ca, Sm and Er:
6) The type of crystalline phase in Ca-Sm-Er system is nitrogen-rich intergranular phase (melilite - (Ca_{1.5},Sm,Er)₂Si₃₋ₓAlₓO₃₊ₓN₄₋ₓ) and the extent of crystallisation in triple pockets is almost full.

These results can be explained by the cation sizes of the dopants, Yb³⁺ (0.86 A), Er³⁺ (0.88 A), Y³⁺ (0.89 A), Dy³⁺ (0.91 A). With increasing size more nitrogen-rich intergranular phase is stable and the extent of crystallinity increases while the size decreases. The combination of these findings has implications for the development of α-β-SiAlON tools, especially cutting tools.

There is a need, especially for cutting tools, but also for other applications that are refractory. With respect to α-β-SiAlON ceramics this means to minimize the amount of sinter additives and at the same time to use sinter additives that form a refractory crystalline grain boundary phase or intergranular phase. Thus, advantageously, 70 to 99 vol-%, preferably 90 to 99 vol-% and especially 95 to 99 vol-% of the intergranular phase is crystalline.

However, some α-β-SiAlON systems exhibit higher crystallinity grades than others which is due to the cation sizes of the dopants, i.e. the smaller the cation size of the rare earth dopants (not Y) the higher the grade of crystallization. A higher crystallinity grade, i.e. full crystallization of the intergranular phase, brings about higher refractoriness in general.

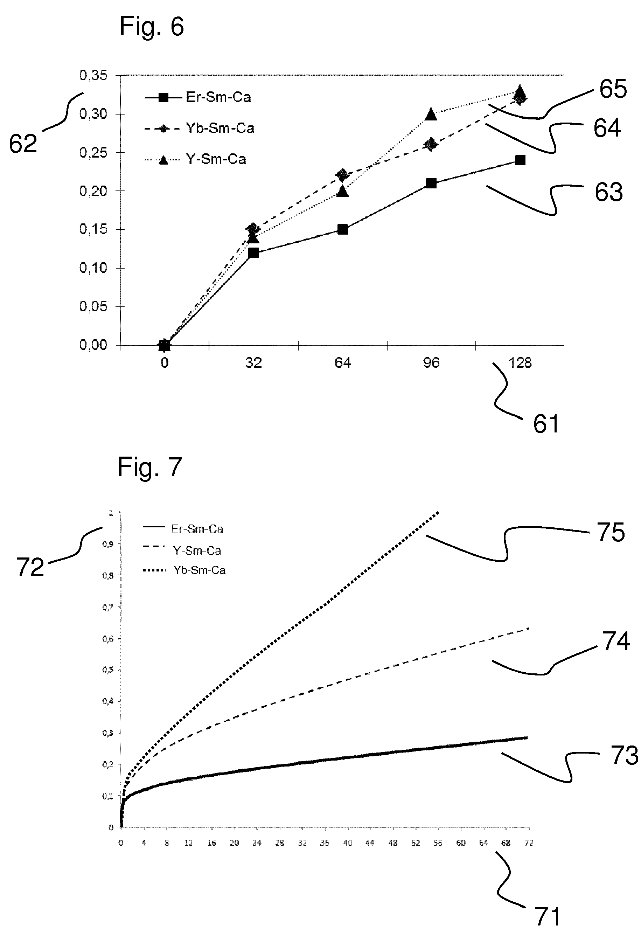

However, nitrogen-rich crystals are more refractory than oxygen-rich crystals as creep tests impressingly show, see Fig. 6.

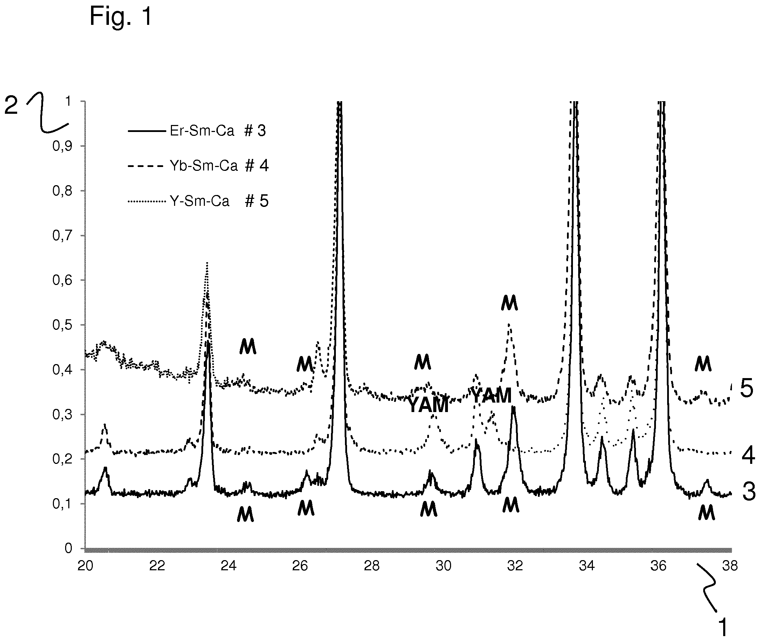

Nitrogen-rich crystals, however, form with increasing cation sizes of the dopant, see e.g. Fig. 1. Thus, the problem arises that conditions for high crystallinity and a nitrogen-rich phase counteract each other. The inventors found that best results in terms of refractoriness and wear resistance are achieved if Er is used as cation dopant. However, also the use of Y, Dy and Yb as cation dopants provides good results.

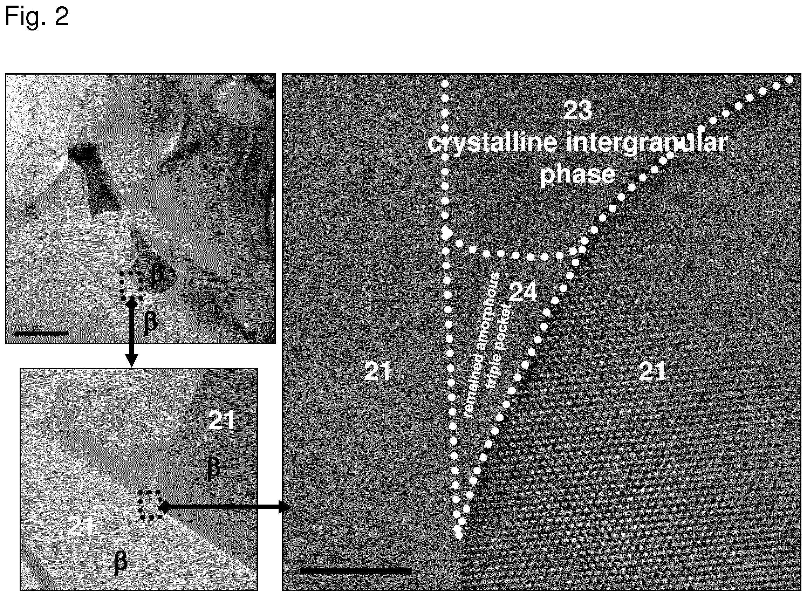

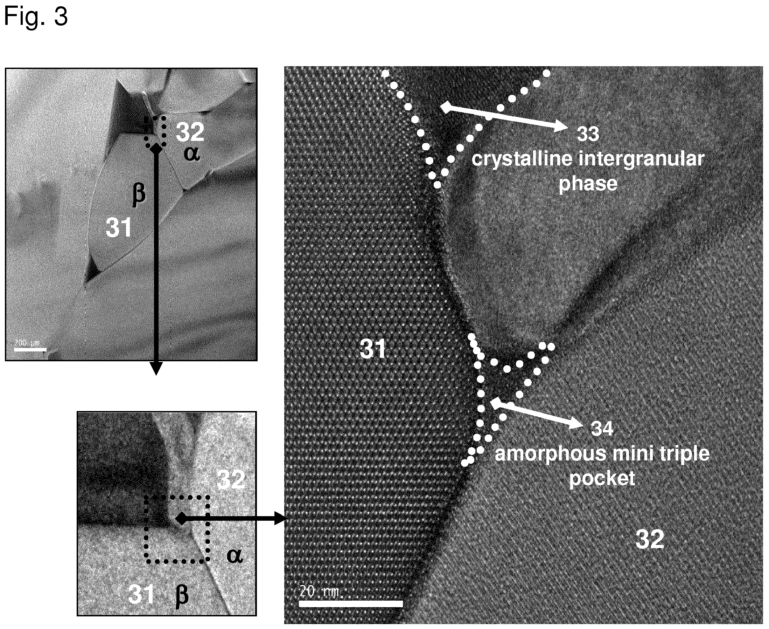

These results were both confirmed by XRD analysis, see Fig. 2, and TEM analysis, see Fig. 3. Better cutting performance results confirm higher resistivity of the ceramics according to the invention. SiC, TiC and/or other hard particles can be added to the composition to further improve the wear behaviour.

Thus, generalized, a ceramic material according to the invention, comprising a multi-phase SiAlON ceramic material having at least a first, second and third phase, comprising:
(a) the α-SiAlON phase having the general formula MₓSi₁₂₋ₘ₋ₙAlₘ₊ₙOnN₁₆₋ₙ, wherein 0 < x < 2 and M is a multi-cationic mixture including
   (i) the element calcium;
   (ii) at least one of dysprosium and/or erbium,
   (iii) the element samarium,
(b) the β-SiAlON phase having the general formula Si_{6-z}Al_{z}O_{z}N_{8-z},
   wherein 0 < z < 4.2,
(c) the intergranular phase, mainly crystalline nature, containing in addition to the elements Si, Al, O and N,
   (i) the element calcium;
   (ii) at least one of dysprosium and/or erbium,
   (iii) the element samarium.

Accoding to another embodiment of the invention, the ceramic material comprises a second phase of the multiphase SiAlON material is β-SiAlON having the general formula Si_{6-z}Al_{z}O_{z}N_{8-z} wherein 0 < z < 4.2, preferably the value of z is 0 < z < 0.8.

The intergranular phase, according to an embodiment of the invention, can be present in an amount between 0 and16 percent by volume based upon total material volume; and the weight ratio of alpha SiAlON to beta SiAlON can vary from about 0:100 to about 80:20.

In the following the invention will be explained in further detail. Examples do not limit the scope of the invention.
- Fig. 1:: XRD- (X-ray diffraction) diagramm of α-β-SiAlON ceramic systems containing differing cation dopants;
- Fig. 2:: TEM analysis (transmission electron microscope), showing little amorphous intergranular phase for α-β-SiAlON ceramic systems containing Y-Sm-Ca cation dopants;
- Fig. 3: TEM analysis (transmission electron microscope), showing very little amorphous intergranular phase for α-β-SiAlON ceramic systems containing Dy-Sm-Ca cation dopants;
- Fig. 4:: TEM analysis (transmission electron microscope), showing almost no amorphous intergranular phase for α-β-SiAlON ceramic systems containing Er-Sm-Ca cation dopants;
- Fig. 5:: TEM analysis (transmission electron microscope), showing almost no amorphous intergranular phase for α-β-SiAlON ceramic systems containing Yb-Sm-Ca cation dopants;
- Fig. 6:: plot showing flank wear of α-β-SiAlON ceramic systems containing Y-Sm-Ca or Er-Sm-Ca or Yb-Sm-Ca cation dopants;
- Fig. 7:: plot showing creep resistance of the α-β-SiAlON ceramic systems containing Y-Sm-Ca, Er-Sm-Ca and Yb-Sm-Ca cation dopants.

High purity α-Si₃N₄ powder (E-10 grade, UBE Co. Ltd., Japan) with 1.4 wt% O content was mixed with high purity AlN powder (H Type, Tokuyama Corp. Japan) containing 1.6 wt% O, Al₂O₃ (Alcoa A16-SG, Pittsburgh, USA), Y₂O₃ (> 99.9 %, H.C. Starck Berlin, Germany), rare earth dopants (Sm₂O₃, Er₂O₃, Yb₂O₃, Dy₂O₃, > 99.9 %, Stanford Materials Corp., USA) and CaCO₃ (> 99.75 %, Reidel-de Haen, Germany).

The compositions were prepared by wet milling in isopropyl alcohol using Si₃N₄ media. The slurries were then dried in a rotary evaporator and sieved with a mesh size of 250 µm. The powders were uniaxially pressed at 25 MPa and subsequently cold isostatically pressed at 300 MPa to improve the green density. The pellets were sintered using a two-step gas pressure sintering cycle with maximum 100 MPa nitrogen gas pressure at 1925 - 1990°C for 1 hour. Sintered samples were afterwards heat treated between 1500 - 1800°C for 2 to 4 h under flowing nitrogen atmosphere.

According to a preferred embodiment a raw ceramic material comprising 80 to 95 wt-% Si₃N₄, 2 to 6 wt-% AlN, 0.2 to 1.2 wt-% Al₂O₃, 0.2 to 0.8 wt-% Sm₂O₃ and 0.02 to 1.5 wt-% CaCO₃ as well as 3 to 6 wt-% Y₂O₃ and/or 5 to 8.5 wt-% Dy₂O₃ and/or 6.0 to 8.0 wt-% Er₂O₃ and/or 6.2 to 8.2 wt-%Yb₂O₃ is used

Especially preferred the raw ceramic material comprises 85 to 93 wt-% Si₃N₄, 3 to 4 wt% AlN, 0.4 to 0.6 wt-% Al₂O₃, 0.3 to 0.4 wt-% Sm₂O₃, 0.08 to 0.12 wt-% CaCO₃ as well as 3.8 to 4.4 wt-% Y₂O₃ and/or 6.5 to 7.0 wt-% Dy₂O₃ and/or 6.8 to 7.2 wt-% Er₂O₃ and/or 7.0 to 7.4 wt-% Yb₂O₃.

The type anc amount of crystalline phases and the α-β-SiAlON phase ratios were dotermined by means of X-ray diffraction analyses (XRD-Rigaku Rirt 2000, Tokyo, Japan).

Samples for transmission electron microscope (TEM) investigations were prepared by cutting, polishing, dimpling and finally ion beam thinning (Battec RES 101). The prepared samples were then coated (Baltec MED 020) with a thin carbon film and characterized to identify α-β- SiAlON polymorphs and secondary phase compositions via 200 kV field emission TEM (JEOL 2100F) attached with a high angle annular dark field scanning transmission electron microscope (STEM-HAADF) detector and an energy dispersive X-ray (EDX) spectrometer (JEOL JED-2300T).

For machining tests, samples were ground to ISO-geometry SNGN120716T02020, which is a chamfered block with a width of 12.7 mm and a height of 7.9 mm. Machining tests were performed on a grey cast iron (GG-15) with a cutting speed of 1000 m/min, a feed rate of 0.5 mm/rev, and a cutting depth of 2.0 mm. At regular intervals, the test was interrupted to measure the width of the wear mark.

Creep tests were carried out at 1400°C in air under 100 MPa load for 72 hrs by using a creep testing equipment (Instron 5581)

Figure 1 shows an XRD-diagramm of α-β-SiAlON ceramic systems containing different cation dopings. The abszissa 1 shows the 2θ angle, whereas the ordinate 2 denotes intensity. It can be seen that the α-β-SiAlON ceramic system doped with the cations Yb, Sm and Ca 4, which is a comparative example, comprises peaks indicating crystalline YAM-phase (Yb₄SiAlO₈N), i.e. oxygen-rich crystalline intergranular phase, whereas α-β-SiAlON ceramic systems doped with the cations either Y, Sm and Ca 5 or Er, Sm, Ca 3 show peaks indicating crystalline nitrogen-rich oxynitride intergranular phase, i.e. a melilite phase (Ca_{1.5},Y,Re)₂Si₃₋ₓAlₓO₃₊ₓN₄₋ₓ), wherein 0 ≤ x ≤ 1.

Figure 2 shows a TEM micrograph for an α-β-SiAlON ceramic systems containing Y-Sm-Ca cation dopants. The three micrographs show different magnifications of the ceramic structure, indicating crystalline intergranular phase 23 (melilite) and only a small pocket of remaining amorphous intergranular phase 24 between two β-SiAlON grains 21.

Figure 3 shows TEM micrographs of different magnification of an α-β-SiAlON ceramic systems containing Dy, Sm and Ca cation dopants. Crystalline intergranular phase 33 (melilite) is located between an α-SiAlON 32 and a β-SiAlON 31 grain. Only a mini triple pocket containing amorphous intergranular phase 34 remains.

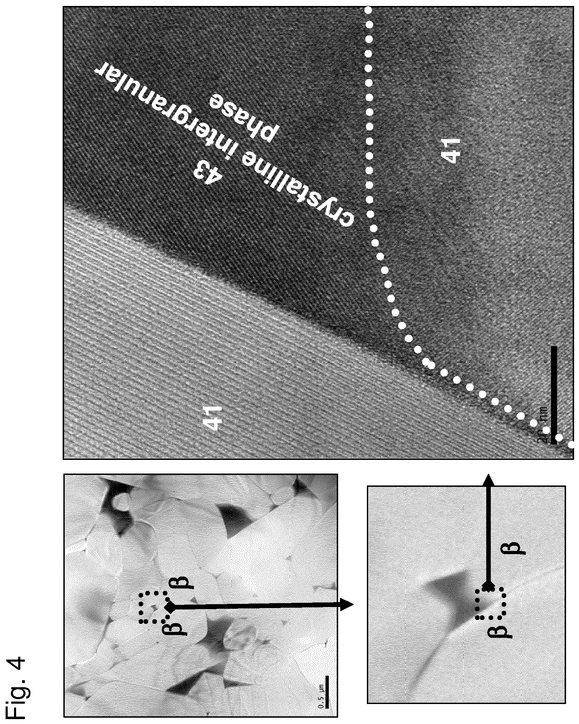

Figure 4 shows TEM micrographs of different magnification of an α-β-SiAlON ceramic systems containing Er, Sm and Ca cation dopants. Here, almost no amorphous intergranular phase remains between the two β-SiAlON grains 41, but only crystalline intergranular phase 43 (melilite) exists.

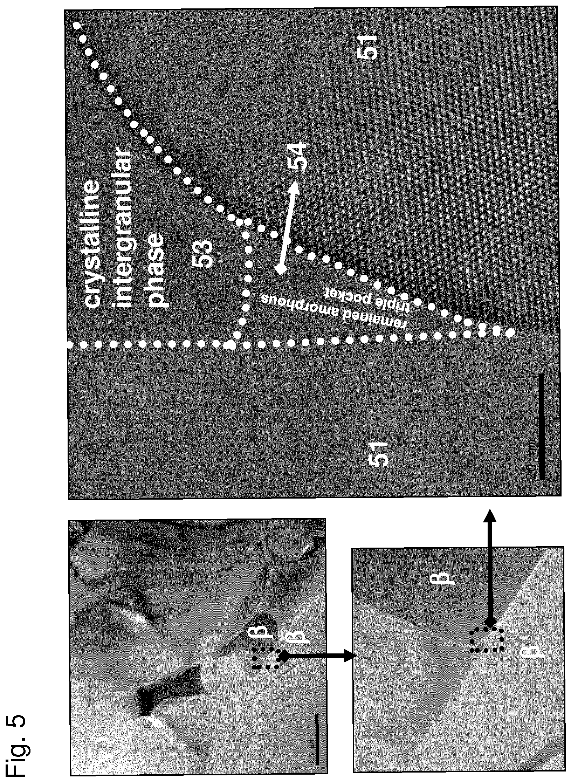

Figure 5 shows TEM micrographs of different magnification of an α-β-SiAlON ceramic systems containing Yb, Sm and Ca cation dopants. Only very little to almost no amorphous intergranular phase 54 is present. The crystalline intergranular phase 53 being present between two β-SiAlON grains 51 comprises YAM.

Figure 6 shows the flank wear (width of flank wear mark) in mm, ordinate 62 of α-β-SiAlON ceramic systems as function of oscillation cycles (number of cuts), abscissa 61. It can be seen that α-β-SiAlON ceramic samples doped with Er, Sm and Ca 63 show significantly lower flank wear after 128 cycles than α-β-SiAlON ceramic samples doped with Y, Sm and Ca 65 or especially with Yb, Sm and Ca 64. The wear width is severely reduced, about 30 % compared to the system doped with Y, Sm and Ca and Yb, Sm and Ca.

Also the creep resistance of α-β-SiAlON ceramics doped with Er, Sm and Ca 73 is clearly better than creep resistance of α-β-SiAlON ceramics doped with Y, Sm and Ca 74, see Fig. 7. In Fig. 7 the abscissa 71 denotes time and the ordinate 72 displays flexural creep strain in (%). Creep strain of the sample doped with Er, Sm and Ca 73 is approximately half of the creep strain of the sample doped with Y, Sm and Ca 74 and approximately ¼th of the value of the sample doped with Yb, Sm and Ca 75.

These results document the extraordinary performance improvement that can be achieved by choosing the optimal dopant system for α-β-SiAlON ceramics.

## Claims

1. A ceramic material comprising α- and β-SiAlON phases as well as an intergranular phase, wherein the intergranular phase comprises crystalline nitrogen-rich oxynitride comprising melilite, and
(a) the α-SiAlON phase having the general formula MₓSi₁₂₋ₘ₋ₙAlₘ₊ₙOₙN₁₆₋ₙ, wherein 0 < x < 2 and M is a multi-cationic mixture including
(i) the element calcium;
(ii) at least one of Dysprosium and/or Erbium,
(iii) the element Samarium,
(b) the β-SiAlON phase having the general formula Si_{6-z}Al_{z}O_{z}N_{8-z},
wherein 0 < z <4.2;
(c) the intergranular phase, mainly crystalline nature, containing in addition to the elements Si, Al, O and N,
(i) the element calcium;
(ii) at least one of-Dysprosium and-/or Erbium,
(iii) the element Samarium,

2. A ceramic material according to Claim 1, wherein 70 to 99 vol%, preferably 90 to 99 vol% and especially 95 to 99 vol% of the intergranular phase is crystalline.

3. A ceramic material according to Claim 1, wherein the melilite, is preferably aluminium containing melilite.

4. A ceramic material of Claim 1, wherein the second phase of the multiphase SiAlON material is β-SiAlON having the general formula Si_{6-z}Al_{z}O_{z}N_{8-z} wherein z is 0 < z < 0.8.

5. A ceramic material according to any of the preceding claims, further comprising hard particles, preferably SiC, TiC and/or other hard particles.

6. A cutting tool, **characterized by** comprising a ceramic material according to any of Claim 1 to 5.

7. A raw ceramic powder for producing the ceramic material according to any of Claim 1 to 5, comprising 80 to 95 wt% Si₃N₄, 2 to 6 wt% AlN, 0.2 to 1.2 wt% Al₂O₃, 0.2 to 0.8 wt% Sm₂O₃ and 0.02 to 1.5 wt% CaCO₃ and 5 to 8.5 wt% Dy₂O₃ and/or 6.0 to 8.0 wt% Er₂O₃.

8. A raw ceramic powder-according to Claim 7, comprising 85 to 93 wt% Si₃N₄, 3 to 4 wt% AlN, 0.4 to 0.6 wt% Al₂O₃, 0.3 to 0.4 wt% Sm₂O₃, 0.08 to 0.12 wt-% CaCO₃ and 6.5 to 7.0 wt% Dy₂O₃ and/or 6.8 to 7.2 wt% Er₂O₃.

## Patentansprüche

1. Keramikmaterial, umfassend α- und β-SiAlON-Phasen und auch eine intergranulare Phase, wobei die intergranulare Phase kristalline stickstoffreichen Oxynitrid aufweist, habend Melilith, und
(a) die α -SiAlON Phase, umfassend die generelle Formel MxSi₁₂₋ₘ₋ₙAlₘ₊ₙOₙN₁₆₋ₙ, wobei 0 < x < 2 und M eine multikationische Mischung ist, umfassend
(i) die Elemente Calcium;
(ii) mindestens eines von Dysprosium und/oder Erbium,
(iii) die Elemente Samarium,
(b) die β-SiAION Phase, umfassend die generelle Forme Si_{6-z}Al_{z}O_{z}N_{8-z}, wobei 0 < z <4.2;
(c) die intergranulare Phase, hauptsächlich kristalline Natur, umfassend zusätzlich zu der Elementen Si, Al, O und N,
(i) die Elemente Calcium;
(ii) mindestens eines von Dysprosium und/oder Erbium,
(iii) die Elemente Samarium,

2. Keramikmaterial gemäß Anspruch 1, wobei 70 bis 99 Vol.%, vorzugweise 90 bis 99 Vol.% und besonders 95 bis 99 Vol.% der intergranularen Phasen kristallin ist.

3. Keramikmaterial gemäß Anspruch 1, wobei der Melilith vorzugweise Aluminium mit Melilith ist.

4. Keramikmaterial gemäß Anspruch 1, wobei die zweite Phase des multi-phasigen SiAION-Material β-SiAION, umfassend die generelle Formel Si_{6-z}Al_{z}O_{z}N_{8-z}, wobei z 0 < z < 0.8 ist.

5. Keramik material gemäß einem der vorangehenden Ansprüche, ferner umfassend harten Partikel, vorzugweise SiC, TiC und/oder andere harten Partikel.

6. Schneidwerkzeug, **dadurch gekennzeichnet, dass** es ein Keramikmaterial gemäß einem der Ansprüche 1 bis 5 umfasst.

7. Keramisches Rohrpulver zur Herstellung von dem Keramikmaterial gemäß einem der Ansprüche 1 bis 5, umfassend 80 bis 95 Gew.% Si₃N₄, 2 bis 6 Gew.% AIN, 0.2 bis 1.2 Gew.% AI₂0₃, 0.2 bis 0.8 Gew.% Sm₂O₃ und 0.02 bis 1.5 Gew.% CaCO₃ und 5 bis 8.5 Gew.% Dy₂O₃ und/oder 6.0 bis 8.0 Gew.% Er₂O₃.

8. Keramisches Rohrpulver gemäß Anspruch 7, umfassend 85 bis 93 Gew% Si₃N₄, 3 bis 4 Gew.% AIN, 0.4 bis 0.6 Gew.% AI₂O₃, 0.3 bis 0.4 Gew.% Sm₂O₃, 0.08 bis 0.12 Gew.% CaCO₃ und 6.5 bis 7.0 Gew.% Dy₂O₃ und/oder 6.8 bis 7.2 Gew.% Er₂O₃.

## Revendications

1. Un matériau céramique comprenant des phases α- et β-SiAlON ainsi qu'une phase intergranulaire, dans lequel la phase intergranulaire comprend de l'oxynitrure cristallin comprenant de la mélilite riche en azote, et
(a) la phase α-SiAlON ayant la formule générale MxSi₁₂₋ₘ₋ₙAlₘ₊ₙOₙN₁₆₋ₙ, dans lequel 0 < x < 2 et M est un mélange cationique comprenant
(i) l'élément de calcium ;
(ii) au moins un élément parmi le dysprosium et/ou l'erbium,
(iii) l'élément de samarium,
(b) la phase β-SiAION ayant la formule générale S_{i6-z}Al_{z}O_{z}N_{8-z},
dans lequel 0 < z < 4.2;
(c) la phase intergranulaire, principalement de nature cristalline, comprenant en plus des éléments Si, Al, O et N,
(i) l'élément de calcium ;
(ii) au moins un élément parmi le dysprosium et/ou l'erbium,
(iii) l'élément de samarium.

2. Un matériau céramique selon la revendication 1, dans lequel 70 à 99% en volume, de préférence 90 à 99% en volume et en particulier 95 à 99% en volume de la phase intergranulaire est cristalline.

3. Un matériau céramique selon la revendication 1, dans lequel la mélilite est de préférence la mélilite contenant de l'aluminium.

4. Un matériau céramique selon la revendication 1, dans lequel la deuxième phase du matériau SiAlON multiphase est le β-SiAlON ayant la formule générale S_{i6-z}Al_{z}O_{z}N_{8-z}, dans lequel z est 0 < z < 0.8.

5. Un matériau céramique selon l'une quelconque des revendications précédentes, comprenant en outre des particules dures, de préférence du Sic, du TiC et/ou d'autres particules dures.

6. Un outil de coupe, **caractérisé en ce qu'**il comprend un matériau céramique selon l'une quelconque des revendications 1 à 5.

7. Une poudre céramique brute afin de produire le matériau céramique selon l'une quelconque des revendications 1 à 5 comprenant 80 à 95% en poids du Si₃N₄, 2 à 6% en poids du AlN, 0.2 à 1.2% en poids du AI₂O₃, 0.2 à 0.8% en poids du Sm₂O₃ et 0.02 à 1.5% en poids du CaCO₃ et 5 à 8.5% en poids du Dy₂O₃ et/ou 6.0 à 8.0% en poids du Er₂O₃.

8. Une poudre céramique brute selon la revendication 7, comprenant 85 à 93% en poids du Si₃N₄, 3 à 4% en poids du AlN, 0.4 à 0.6% en poids du Al₂O₃, 0.3 à 0.4% en poids du Sm₂O₃, 0.08 à 0.12% en poids du CaCO₃ et 6.5 à 7.0% en poids du Dy₂O₃ et/ou 6.8 à 7.2% en poids du Er₂O₃.
